# EUROPEAN PATENT SPECIFICATION

(11) **EP 2 126 403 B1**
(45) Date of publication and mention of the grant of the patent: **22.05.2013**
(21) Application number: 07861159.7
(22) Date of filing: 20.12.2007
(51) Int. Cl.: F16F 9/44, B60G 17/08, F16F 9/348, F16F 9/46

(54) **METHOD FOR ADJUSTING DAMPING CHARACTERISTICS IN A SHOCK ABSORBER**
VERFAHREN UND ANPASSUNG VON DÄMPFEIGENSCHAFTEN BEI EINEM STOSSDÄMPFER
PROCEDE D'AJUSTEMENT DE CARACTERISTIQUES D'AMORTISSEMENT DANS UN AMORTISSEUR

(30) Priority: 26.12.2006 SE 0602821
(43) Date of publication of application: 02.12.2009
(73) Proprietor: ÖHLINS RACING AB, 194 27 Upplands Väsby (SE)
(72) Inventor: SINTORN, Torkel, 185 91 Vaxholm (SE)
(74) Representative: Loqvist, Gabriel Mathias
(86) International application number: PCT/SE2007/051064
(87) International publication number: WO 2008/079093

(56) References cited:
- WO-A2-94/12360
- US-A- 4 275 900
- US-A- 4 936 424

## Description

### Technical field

The invention relates to a pressurized shock absorber intended for a vehicle, which basically comprises a damping medium-filled damping cylinder divided into two damping chambers, a compression chamber and a rebound chamber, by a piston fixed to a piston rod. A restriction in the piston allows damping medium to pass between the chambers and valves serve to adjust the damping medium flow between the chambers, that is to say the damping characteristics of the shock absorber.

### Background of the invention

In order to avoid cavitation in a pressurized shock absorber of the aforementioned type whilst retaining a large adjustment range and a rapid response time even with large shock absorber strokes and/or high piston speeds, that is to say large pressure differentials over the piston, use is currently made of a principle which is referred to by the applicant as positive pressure build-up or TTX. A pressurized shock absorber with positive pressure build-up always has a pressure greater than zero on both sides of the piston arranged in the damping cylinder, regardless of what conditions prevail. Pressurization on both sides of the piston is achieved in that a gas or spring-pressurized member, arranged in a pressurization reservoir, pressurizes a volume or space common to both damping chambers to a predetermined pressure. Pressurization of the damping medium in the body of the shock absorber then occurs parallel with the stroke movement, which is axial in relation to the damping cylinder. The two damping chambers with the common volume are coupled together by means of a first flow duct between the compression chamber and the common volume and a second flow duct between the rebound chamber and the common volume. Two separate adjusting elements are provided in order to adjust the flow in the flow ducts between the respective damping chambers and the pressurized common volume. Said adjusting elements comprise one or more damping force-generating one-way valves(s) and a check valve, which opens as soon as the pressure in the common volume exceeds the pressure in the chamber having the lowest pressure at that particular instant. If a solid piston is used, the entire damping medium flow passes via the adjusting elements; see the applicant's own patent application EP 1659310 A2, for example, in which the adjusting element comprises a leakage flow valve, a main valve and a check valve. The leakage flow valve is arranged in parallel with the main valve.

In a vehicle intended to absorb rapid movements and large impacts, caused by the nature of the running surface with its stones, holes and large irregularities, the limitations of the TTX principle lie in the area of the flow ducts and its capacity to allow the passage of a sufficiently large damping medium flow. This large damping medium flow is made possible by also introducing a flow, limited by the first flow-restricting element, via the main piston. These first flow-restricting elements are preferably opened only when large pressure differentials occur between the damping chambers, that is to say the elements are high-speed damping elements. A leakage or a bleed can also be introduced directly via the piston, which means that small pressure differentials over the piston, which occur in small, slow damping movements, can be evened out without the first flow-restricting elements in the main piston needing to open. A device for adjusting this leakage flow in the piston and thereby controlling the low-speed damping, that is to say the damping of the vehicle's chassis/frame movements, can be seen, for example in the applicant's own patent US 6,651,964 or in the patents US 5,277,283 and US 6,079,526. In these patents this leakage flow is adjusted by the restriction of a leakage flow duct, that is to say the flow gives an increase in force during the opening sequence which is relatively slow.

Easy and cost-effective adjustment of the low-speed damping separately from the high-speed damping, that is to say adjusting the damping characteristics for small or large pressure differentials over the main piston separately from one another, has proved to be a problem in a vehicle shock absorber with positive pressure build-up.

With small strokes and a slight pressure differential over the main piston, it can also be a problem, in a shock absorber with positive pressure build-up, to generate a sufficiently rapid increase in force, that is to say a high damping constant, also at the start of the stroke.

In the prior art, for example in EP 1659310 A2, the first object is achieved in that two separate valves in the form of a high-speed valve and a low-speed valve are arranged in the main valve of the adjusting element. This implies a complicated and expensive main valve with many parts. The second problem has hitherto been solved only by the use of a shock absorber of conventional type, that is to say by using a shock absorber in which the pressure build-up occurs in series rather than in parallel, as with a TTX shock absorber. This type of shock absorber carries disadvantages such as cavitation and a slow pressure build-up in the event of a large pressure gradient over the main piston and leads to difficulties in optimizing the damping characteristics on the compression and rebound stroke independently of one another.

### Object of the invention

The object of the present invention is to separate the adjustment of the damping characteristics for small or large pressure differentials over the piston.

The object of the invention is also to generate a sufficiently rapid build-up of force in the shock absorber even with small pressure differentials over the main piston.

A further object of the invention is to find a simple and economic solution to these problems.

### Summary of the invention

The invention relates to a method of separating the adjustment of the damping characteristics for small or large pressure differentials over a main piston in a shock absorber with positive pressure build-up, intended for a vehicle. The shock absorber comprises a damping medium-filled damping cylinder, divided into two damping chambers by the main piston. Large pressure differentials over the main piston are caused by high speeds or large strokes on an axial movement of the main piston in the damping cylinder, in which the piston movement is preferably induced by movements between a vehicle wheel and its frame/chassis. With a positive pressure build-up, a pressure greater than zero is always generated on both sides of the main piston in that a pressure greater than zero is ensured in both of the damping chambers through pressurization of a first damping medium-filled space common to both damping chambers. A pressurizing member pressurizes the common first space to a certain basic pressure, which varies between 5 and 30 bar. At least a first and a second duct extending through the main piston are arranged in or on the main piston, the first duct being a leakage flow duct intended for low-speed damping and the second duct being defined, for example, by leaf shims, which open only at high speeds and/or under large strokes. Two separate adjusting elements are arranged in separate flow ducts which connect the first space and the respective damping chambers together. The adjusting elements comprise one or more damping force-generating one-way valve(s) of previously known type, each with its own check valve. With large pressure differentials over the main piston, which also give an increased flow through the flow ducts and an increased pressure in the first common space, the damping characteristics are adjusted by the damping force-generating one-way valve(s) in the adjusting elements and/or by the flow through the second duct through the main piston. With small pressure differentials, preferably between 0 and 5 bar, over the main piston, the damping characteristics are instead adjusted by a flow/leakage flow through the first duct, extending through the main piston. The path of the flow/leakage flow is influenced in that the damping medium is prevented by the check valve(s) in the adjusting elements from flowing between the damping chambers via the separate flow ducts which connect the first space and the respective damping chambers together.

In a first embodiment the adjustment of the damping characteristics is separated in that the check valve(s) in the adjusting elements are kept in a closed position by a force generated by a spring, when the pressure differentials over the main piston are small. The force is equal to the force which the pressure differentials over the main piston generate on the check valve(s) through the change in pressure in the first common space.

In a further embodiment the damping medium flow through the check valves is prevented in that the force acting on the check valves is selected so that a certain pressure differential over the main piston is required in order to open these.

The pressure differential over the main piston that is required for opening of the check valve is preferably determined by the basic pressure which prevails at least in the first common space and which is generated by the pressurizing member.

In a third embodiment of the invention the spring is preloaded by a certain distance. This is done in order to create a function which requires a greater initial force for opening than for compression, which leads to the check valve opening without any delay when it actually opens, so that the adjustment of the damping characteristics occurs at precisely the desired instant.

The preloading of the spring can be modified by means of an adjusting element accessibly arranged for adjustment when the shock absorber is assembled into a unit, or can be performed when first fitting the adjusting element in the shock absorber.

In a further embodiment the restriction of the damping medium flow in the duct in the main piston is adjustable. The magnitude of the restriction is adjustable without affecting the flow through one-way valves of the adjusting elements. The leakage flow via the main piston is preferably adjusted through the action of an adjusting bar, which is arranged in the piston rod and through a variation in its position increases or reduces the leakage flow via the piston. Where the restriction of the damping medium flow through the piston is adjustable, the opening pressure of the check valve can be varied and ultimately adjusted to the preloading of the spring that generates the countervailing force on the check valve.

The description above therefore outlines a method in a pressurized shock absorber in which separate adjustment of the damping characteristics is possible for small or large pressure differentials over the piston. This is achieved in that the damping characteristics for small pressure differentials are determined by a leakage flow through first ducts in the main piston and the damping characteristics for large pressure differentials are preferably determined by the flow through the adjusting elements and/or via second ducts in the main piston. The invention also addresses the problem of generating a sufficiently rapid pressure build-up in the shock absorber even with small pressure differentials over the main piston, without detriment to the damping characteristics at high speeds. This is because in the event of larger pressure differentials over the main piston, damping medium flows through the check valve and pressurizes the chamber in which the pressure is lowest, that is to say the positive pressure build-up function with all its advantages is activated again.

The invention will be described in more detail below, with reference to the drawings attached.

### Brief description of the drawings

- Fig. 1: shows the shock absorber on a compressions stroke
- Fig. 2: shows the shock absorber on a rebound stroke
- Fig. 3: shows the adjusting elements
- Fig. 4: shows the damping curves with speed and force on the axes

### Detailed description of the invention

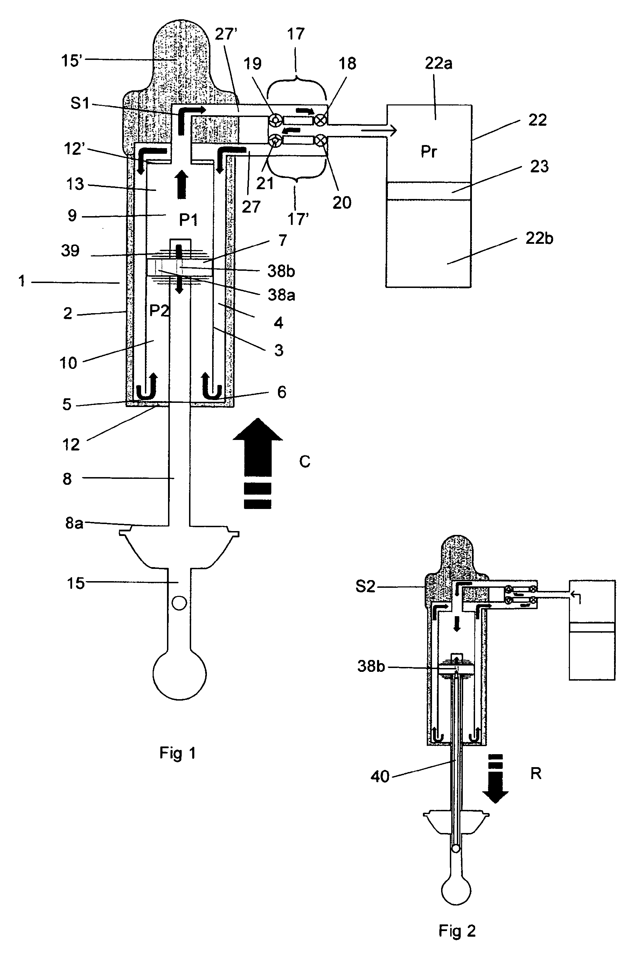

In Figs. 1 and 2 parts of a shock absorber are generally denoted by 1. In Fig. 1 the direction of flow for compression of the shock absorber, or the compression phase, is indicated by the arrows C and in Fig. 2 the direction of flow for expansion of the shock absorber, often referred to as the rebound phase, is indicated by the arrows R.

In the exemplary embodiment the shock absorber consists of a twin-tube shock absorber, the outer tube of which is indicated by 2 and the inner tube or damping cylinder by 3. The tubes are arranged with an intervening gap 4 and at the first end of the shock absorber have passages 5, 6 for a medium contained in the shock absorber. The shock absorber also comprises a main piston 7 and a piston rod 8.

The shock absorber is divided into two damping chambers, the compression space or the compression side being indicated by 9 and the rebound space or rebound side by 10. The main piston 7 and the piston rod 8 are arranged in the damping chambers 9, 10 so that they are displaceable in the direction of the arrows C, R. The piston 7 functions in a damping medium 13, which preferably consists of hydraulic oil, which may contain constituent additives of a type known in the art. Alternatively, glycol and/or water may be used as fluid.

The ends of the shock absorber are indicated by 12 and 12'. The piston rod end 8a comprises a first fixing element 15, for example an end eye, which is intended for fastening the shock absorber to a part of the vehicle in question, moving in response to the running surface, preferably a wheel or runner. At the upper end 2a of the outer tube 2, the shock absorber has a second fixing element 15', for example a cylinder head with associated top eye, which can be fastened to a chassis part of a vehicle in question.

The shock absorber is designed with two separate adjusting elements, which are generally denoted by 17 and 17'. The first the adjusting element comprises a first damping force-generating one-way valve or compression-damping valve 18 and a first check valve 19. The second adjusting element comprises a second damping force-generating one-way valve or rebound-damping valve 20 and a second check valve 21. These damping force-generating one-way valves 18, 20 may in turn consist of one or more valves coupled in parallel and/or in series.

According to Figs. 1 and 2 the shock absorber also has an accumulator or gas reservoir 22, which comprises a separating piston 23. In a first space 22a the gas reservoir encloses damping medium, preferably the aforesaid hydraulic oil with any additives or other fluid (see above). The gas reservoir also comprises a second space 22b, which contains a second medium that is more compressible than the damping medium. The compressible medium may consist of a gas, such as air, nitrogen gas or other gas with additives. By filling the second space with compressible medium, a basic pressure is generated, which acts on the damping medium in the space 22a.

With a large pressure differential on the main piston 7, the pressurization means that the absolute pressure level is maintained at a level, for example at a level of approx. 2 bar or higher, sufficient to minimize the risk of cavitation due to the presence of restrictions in the relevant ducts. The basic pressure is selected according to what damping characteristics are required of the shock absorber and what adjusting element 17, 17' are used.

Said adjusting elements 17, 17' also comprise flow ducts 27, 27', which connect said valves 18, 19, 20 and 21 and the space 22a in the reservoir 22 as well as the gap 4 and the spaces 9 and 10 in the shock absorber together. The gap 4 and the space 10 may be regarded as a common volume. The one-way valve 18 and the check valve 21 therefore form part of a first circuit S1 comprising the space 9, the connection 27', the space 22a, and the connection 27, and in which the gap 4 and the passage(s) 5 and 6 are connected like the space 10. A second circuit S2 comprises the one-way valve 20 and the check valve 19, otherwise having the same connections.

The first damping force-generating one-way valve 18 is connected by its one end to the space 9 in the shock absorber, whilst the first check valve 19 is connected to the gap 4. The second damping force-generating one-way valve 20 is connected to the gap 4, whilst the second check valve 21 is connected to the space 9. Said first valves 18 and 19 are also connected via the connections 27' and 27 and the space 22a to the second valves 20 and 21. The space 22a thus represents a volume common to both of the damping chambers 9, 10.

When the shock absorber device 1 operates in either stroke direction C, R, the main piston 7 moves in the damping cylinder 3 and in this way generates a pressure differential in the damping chambers 9, 10. The pressure differentials create a damping medium flow, which on a compression stroke C is carried in the first circuit S1, see the arrows in Fig. 1, and on a rebound stroke is carried in the second circuit S2, see the arrows in Fig. 2.

The magnitude of these flows S1and S2 basically depends on the pressure differential P_{delta} over the main piston 7 and the design of the adjusting elements 17 and 17'.

The pressure differential P_{delta} over the main piston is P_{delta} =p₁- p₂, where p₁ is the pressure in the damping chamber with compressed volume, that is to say p₁=F1/(Aₚ+ Aₛ), and p₂ is the pressure in the damping chamber with expanded volume, that is to say p₂=F2/ Aₚ. Aₚ is equal to area of the main piston and Aₛ is the piston rod area.

The pressure differential over the main piston 7 is adjusted by modifying its flow resistance. The flow resistance is created by at least two ducts 38a, 38b with a certain area, which extend through the main piston 7. At least one duct 38a is covered by thin leaf valves 39. The thin leaf valves 39 are designed to open first in the event of a certain large pressure differential P_{delta}, in order to adjust the damping characteristics of the shock absorber at extremely high speeds. This is done in order to limit the area of the flow ducts 27, 27' so that only a certain quantity of the damping medium flow is allowed to pass through to the adjusting elements 17, 17'. In the event of less extreme pressure differentials, the high-speed damping is only adjusted in the one-way valves 18, 20 of the adjusting elements 17, 17'.

The second duct or the restriction 38b preferably always has a certain flow area open, in order to allow a certain leakage flow or a bleed via the main piston. This flow area is selected so that a certain quantity of damping medium manages to flow through the duct. This quantity is determined by the pressure differentials P_{delta} over the piston 7 and these must not be too large, since the damping medium then instead takes the easiest way via a larger flow area, which is preferably via the one-way valves 18, 20 of the adjusting elements. A leakage flow via the main piston 7 is therefore allowed only when the shock absorber moves with small, slow movements. The leakage flow in Fig. 1 is shown fixed.

Fig. 2 shows a solution in which the leakage flow is adjustable by axial action, for example by means of an adjusting screw, on an adjusting bar 40 arranged in the piston rod 8. Owing to the upper design shape of the adjusting bar 40, for example a conical shape, different positions of the bar 40 in relation to the restriction 38b produce leakage flows of different magnitude.

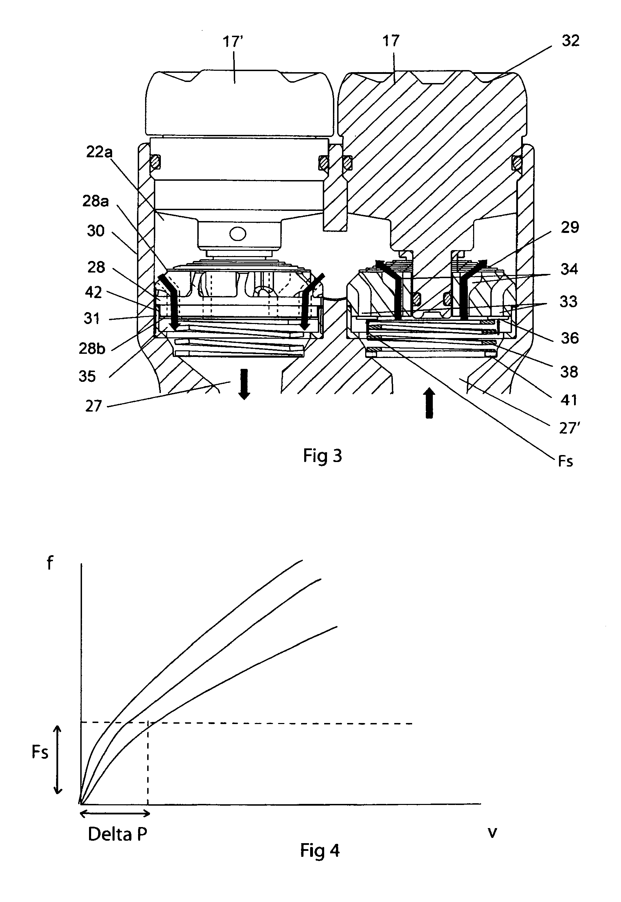

Fig. 3 shows an enlarged view of the adjusting elements 17, 17', which are preferably arranged in or on the second fixing element 15'. The adjusting elements 17 and 17' are of the same construction and reference will here only be made to one of the valves. The valve 17 contains the one-way valve 18, through which damping medium flows in first ducts 34 away from the compression chamber 9 to the common space 22a. The one-way valve 18 takes the form of a valve piston 28 with associated thin leaf valves 29 directly adjoining the first side 28a of the valve piston. The valve piston 28 is fixed in a valve housing 30 between a cup 31 and an actuating member 32. The actuating member may also comprise a duct (not shown) extending between the flow duct 27' and the common volume 22a, through which damping medium can flow in order to minimize the least perturbations in the valve. The check valve 19 is arranged at the other side 28b of the piston. The check valve 19 takes the form, for example, of a slide 36, which acts against a seat 37. The slide 36 may take the form, for example, of a stiff leaf valve and is pressed by means of a force member, such as a spring 38, against the seat 37, preferably tightly against the other side 28b of the piston, in order to prevent a flow through the second through-ducts 33 of the valve piston 28 under certain predefined conditions.

The flow through the second through-duct 33 is prevented when the check valve 19 is closed. The check valve 19 is closed as long as the pressure Pᵣ in the common volume 22a is less than the pressure P₁ prevailing in the compression chamber 9 or when the pressure Pᵣ in the volume 22a gives a force Fᵣ on the slide 36 which is less than the spring force Fₛ generated by the spring 37.

Since the pressure in the damping chambers 8/9 in which the damping medium is compressed is greater than the pressure in the damping chambers 8/9 in which the chamber expands, the flow is led into the volume 22a through the one-way valve 18 in the adjusting element 17 described above and out of the volume 22a through the check valve 21 of the second adjusting element 17'. The opposite applies to the second adjusting element 17'. Since the adjusting elements 17, 17' are of the same construction, both of the check valves 19, 21 are therefore closed as long as the spring forces Fₛ acting on them are greater than the force Fᵣ generated by the pressure Pᵣ in the volume 22a.

The compression flow C through the circuit S1is capable of generating a certain increase in the pressure Pᵣ in the volume, since the damping medium volume expelled by the piston rod 8 is forced into the space 22a and compresses the compressible medium in the space 22b. The pressure Pᵣ can also be expected to increase with the temperature, since the damping medium is expanded by a rise in the temperature and the space 22a accommodates even this increased volume.

Through the right choice of spring characteristics for the spring 37, however, it is therefore possible to create a condition which means that, with small pressure differentials, for example between 0 and 5 bar, over the main piston 7, damping medium will be accumulated in the volume/the space 22a and the damping characteristics will be determined solely by the adjustable leakage flow in the main piston 7.

The spring characteristics are preferably selected so that the spring is subject to a preload fs. Preloading the spring means that a greater initial force is required for opening than is required for compression Fₛ, which leads to the check valve opening without delay when it actually opens. The spring force Fₛ is preferably selected so that the check valve is closed as long as the pressure in the volume 22a is between 5 and 30 bar, that is to say the spring constant k should lie between 0.5 and 10N/mm and the preload fs should be between 0.5 and 5 mm. These values will obviously vary depending on the magnitude of the leakage flow via the main piston 7.

In a first embodiment, see Fig. 3 valve 17, preloading is performed by introducing a distance piece 41 with a certain predetermined height into the cup 31. In a second embodiment (not shown) the cup 31 is an exchangeable component having a certain wall height. In a third embodiment, see Fig. 3 valve 17', the position of the valve piston 28 in the valve housing 30 is vertically adjustable, for example in that a threaded union 42 couples the piston 38 to the valve housing 30 or the cup 31 and that the position of the piston can be adjusted by means of an external adjusting element, which may be integrally formed with the actuating member 32 fixed to the piston. With the third embodiment, therefore, the preloading of the spring 37 can be adjusted by means of an adjusting element accessibly arranged for adjustment when the shock absorber is assembled into a unit.

With large pressure differentials over the main piston 7, the check valves 19, 21 open and damping medium flows into and pressurizes the chamber in which the pressure is lowest, that is to say the positive pressure build-up function is activated again and cavitation can be avoided whilst reducing the response time for the larger pressure build-up of the shock absorber.

Fig. 4 shows the damping curves for the shock absorber according to the invention. The curves are plotted with the piston rod speed v on the horizontal axis and the force F on the vertical axis. The gradient of the damping curves therefore determines how rapidly the force is built up and this build-up of force is determined by the nature of the check valves 19, 21 or by the leakage flow through the main piston 7.

A transition therefore occurs between serial flow and parallel flow, denoted in Fig. 4 by Fₒ, when the check valve 19, 21 is opened. Just when this occurs depends on the preloading fs of the check valve or its spring constant k, which creates a pressure gradient Delta P over the check valve. The relationship of the pressure gradient Delta P to the speed of movement v is in turn also adjustable by adjusting the leakage flow through a restriction 38b over the main piston 7.

If the restriction 38b over the main piston is designed so that a lot of damping medium can flow via the main piston, the transition between parallel and serial flow occurs at a higher piston rod speed v, due to the fact that delta P is not attained until the piston speed is so great that the restriction 38b, despite its size, can no longer allow all the damping medium to pass through. If, on the other hand, the preloading fs is high or the spring constant Fs is large, the transition then also occurs at a higher piston speed, since a greater pressure gradient Delta P is required in order to open the check valve.

The effect of having a serial flow for low speeds but parallel flows at higher piston speeds is that with the serial flow the damping constant is higher than with the parallel flow. Fig. 4 illustrates this in that the damping curve slope is steeper up to a certain piston rod speed v. Since the nature of the check valve 18, 21 or the restriction 38b in the main piston 7 has an effect on this, it is possible to control the damping constants separately, which affords a facility for controlling the chassis movements on a vehicle, that is to say low frequencies and low piston speeds, separately from wheel movements, that is to say high frequencies and high piston speeds.

The invention is not limited to the exemplary embodiment demonstrated above, but may be modified without departing from the scope as defined by the appended claims.

## Claims

1. Method of separating the adjustment of the damping characteristics for small or large pressure differentials over a main piston (7) in a shock absorber (1) with positive pressure build-up, in which a pressure greater than zero is ensured on both sides of the main piston (7), the shock absorber comprising a damping medium-filled damping cylinder (3), divided into two damping chambers (8, 9) by the main piston (7), in or on which at least a first and a second duct (38b, 38a) are arranged extending through the main piston (7), and a pressure greater than zero being ensured in the damping chambers (8, 9) through the pressurization of a first damping medium-filled space (22a), common to both the damping chambers (8, 9) and connected to both of the damping chambers (8, 9), to a certain basic pressure (Pr), and two separate adjusting elements (17, 17') comprising one or more damping force-generating one-way valve(s) (18, 20), each with its own check valve (19, 21), being arranged in separate flow ducts (27, 27') which connect the first space (22a) and the respective damping chambers (8, 9) together, **characterized in that** for large pressure differentials over the main piston (7), which also generate an increased pressure in the first common space (22a), the damping characteristics are adjusted by the damping force-generating one-way valve(s) (18, 20) in the adjusting elements (17, 17') and for small pressure differentials over the main piston (7) the damping characteristics are instead adjusted by a flow/bleed flow through the first duct (38b) in or on the main piston (7) **in that** the damping medium is prevented by the check valve(s) (19, 21) in the adjusting elements (17, 17') from flowing between the damping chambers (8, 9) via the separate flow ducts (27, 27') which connect the first space (22a) and the respective damping chambers (8, 9) together.

2. Method according to Claim 1, **characterized in that** the check valve(s) (19, 21) in the adjusting elements (17, 17') are subjected to and kept in a closed position by a force (Fₛ), which is generated by a spring (37) and which is equal to the force which the small pressure differentials over the main piston (7) generate on the check valve(s) (19, 21) through the change in pressure in the first common space (22a).

3. Method according to Claim 1 or 2, **characterized in that** the small pressure differentials over the main piston (7) are between 0 and 5 bar.

4. Method according to Claim 2 or 3, **characterized in that** the damping medium flow through the check valves (19, 21) is prevented **in that** the force (Fₛ) acting on the check valves (19, 21) is selected so that a certain pressure differential over the main piston (7) is required in order to open these.

5. Method according to Claim 4, **characterized in that** the pressure differential over the main piston (7) that is required in order to open the check valve (19, 21) is determined by the basic pressure (Pr) which prevails at least in the common volume (22a) and which is generated by the pressurizing member (23).

6. Method according to any one of the preceding Claims, **characterized in that** the spring (37) is preloaded by a certain distance (fs) in order to create a function which requires a greater initial force for opening than for compression.

7. Method according to Claim 6, **characterized in that** the preloading (fs) of the spring (38) can be adjusted by means of an adjusting element (32) accessibly arranged for adjustment when the shock absorber (1) is assembled into a unit.

8. Method according to Claim 6, **characterized in that** a predetermined preloading (fs) of the spring (38) is performed when first fitting the adjusting element (17, 17') in the shock absorber.

9. Method according to any one of the preceding Claims, **characterized in that** the damping medium flow through the duct (38b) is adjustable.

10. Method according to Claim 9, **characterized in that** the damping medium flow through the duct (38b) is adjusted through the action of an adjusting bar (40), which is arranged in the piston rod (8) and which through its design shape and a variation in its position increases or reduces the leakage flow via the main piston (7).

## Patentansprüche

1. Verfahren zum Trennen der Anpassung der Dämpfeigenschaften für kleine oder große Druckdifferentiale über einen Arbeitskolben (7) bei einem Stoßdämpfer (1) mit positivem Druckaufbau, bei dem ein Druck über Null auf beiden Seiten des Arbeitskolbens (7) gewährleistet ist, der Stoßdämpfer umfassend einen mit Dämpfmedium gefüllten Dämpfzylinder (3), der durch den Arbeitszylinder (7) in zwei Dämpfkammern (8, 9) aufgeteilt ist, in oder an dem zumindest ein erster und ein zweiter Kanal (38b, 38a) durch den Arbeitszylinder (7) verlaufend angeordnet sind, und wobei ein Druck über Null in den Dämpfkammern (8, 9) über eine Druckbeaufschlagung eines ersten mit Dämpfmittel gefüllten Raums (22a), der beiden der Dämpfkammern (8, 9) gemeinsam ist und mit beiden der Dämpfkammern (8, 9) verbunden ist, auf einen bestimmten Grunddruck (Pr) gewährleistet wird, und zwei separate Anpassungselemente (17, 17'), die ein oder mehr dämpfkrafterzeugende Einwegventil(e) (18, 20) umfassen, jedes mit seinem eigenen Rückschlagventil (19, 21), die in separaten Stromkanälen (27, 27') angeordnet sind, welche den ersten Raum (22a) und die jeweiligen Dämpfkammern (8, 9) miteinander verbinden, **dadurch gekennzeichnet, dass** die Dämpfeigenschaften für große Druckdifferentiale über den Arbeitskolben (7), die außerdem einen erhöhten Druck im ersten gemeinsamen Raum (22a) erzeugen, durch das (die) dämpfkrafterzeugenden Einwegventil(e) (18, 20) in den Anpassungselementen (17, 17') angepasst werden und die Dämpfeigenschaften für kleine Druckdifferentiale über den Arbeitskolben (7) stattdessen durch einen Strom/Ausstrom durch den ersten Kanal (38b) in oder an dem Arbeitskolben (7) angepasst werden, dass durch das (die) die Rückschlagventil(e) (19, 21) in den Anpassungselementen (17, 17') verhindert ist, dass das Dämpfmedium über die separaten Stromkanäle (27, 27'), die den ersten Raum (22a) und die jeweiligen Dämpfkammern (8, 9) miteinander verbinden, zwischen den Dämpfkammern (8, 9) strömt.

2. Verfahren nach Anspruch 1, **dadurch gekennzeichnet, dass** das (die) Rückschlagventil(e) (19, 21) in den Anpassungselementen (17, 17') durch eine Kraft (Fₛ) einer geschlossenen Position unterworfen und darin gehalten werden, welche durch eine Feder (37) erzeugt wird und welche gleich der Kraft ist, die die kleinen Druckdifferentiale über den Arbeitskolben (7) auf das (die) Rückschlagventil(e) (19, 21) über die Druckänderung im ersten gemeinsamen Raum (22a) erzeugen.

3. Verfahren nach einem der Ansprüche 1 oder 2, **dadurch gekennzeichnet, dass** die kleinen Druckdifferentiale über den Arbeitskolben (7) zwischen 0 und 5 Bar liegen.

4. Verfahren nach einem der Ansprüche 2 oder 3, **dadurch gekennzeichnet, dass** der Dämpfmediumstrom durch das (die) Rückschlagventil(e) (19, 21) dadurch verhindert wird, dass die Kraft (Fₛ), die auf die Rückschlagventile (19, 21) einwirkt, so ausgewählt wird, dass ein bestimmtes Druckdifferential über den Arbeitskolben (7) zum Öffnen derselben erforderlich ist.

5. Verfahren nach einem Anspruch 4, **dadurch gekennzeichnet, dass** das Druckdifferential über den Arbeitskolben (7), das zum Öffnen der Rückschlagventile (19, 21) erforderlich ist, durch den Grunddruck (Pr) bestimmt wird, der zumindest im gemeinsamen Volumen (22a) vorherrscht und durch das Druckbeaufschlagungsglied (23) erzeugt wird.

6. Verfahren nach einem der vorhergehenden Ansprüche, **dadurch gekennzeichnet, dass** die Feder (37) über einen bestimmten Abstand (fs) vorgespannt ist, um eine Funktion zu schaffen, die eine größere Anfangskraft zum Öffnen als zum Zusammendrücken erfordert.

7. Verfahren nach Anspruch 6, **dadurch gekennzeichnet, dass** die Vorspannung (fs) der Feder (38) mithilfe eines Anpassungselements (32) angepasst werden kann, das zugänglich zur Anpassung angeordnet wird, wenn der Stoßdämpfer (1) zu einer Einheit zusammengebaut wird.

8. Verfahren nach Anspruch 8, **dadurch gekennzeichnet, dass** eine vorgegebene Vorspannung (fs) der Feder (38) beim ersten Einpassen des Anpassungselements (17, 17') in den Stoßdämpfer ausgeführt wird.

9. Verfahren nach einem der vorhergehenden Ansprüche, **dadurch gekennzeichnet, dass** der Dämpfmediumstrom durch den Kanal (38b) anpassbar ist.

10. Verfahren nach Anspruch 9, **dadurch gekennzeichnet, dass** der Dämpfmediumstrom durch den Kanal (38b) durch die Wirkung einer Anpassstange (40) angepasst wird, die in der Kolbenstange (8) angeordnet ist und die über ihre Gestaltungsform und eine Veränderung in ihrer Position den Leckstrom über den Arbeitskolben (7) erhöht oder vermindert.

## Revendications

1. Procédé de séparation de l'ajustement des caractéristiques d'amortissement pour des différentiels de pression faibles ou élevés sur un piston principal (7) dans un amortisseur (1) avec une accumulation de pression positive, dans lequel une pression supérieure à zéro est garantie sur les deux côtés du piston principal (7), l'amortisseur comprenant un cylindre d'amortissement (3) rempli de fluide amortisseur, divisé en deux chambres d'amortissement (8, 9) par le piston principal (7), dans ou sur lequel au moins un premier et un deuxième tuyau (38b, 38a) sont agencés, s'étendant à travers le piston principal (7), et une pression supérieure à zéro étant garantie dans les chambres d'amortissement (8, 9) par la pressurisation d'un premier espace rempli de fluide amortisseur (22a), commun aux deux chambres d'amortissement (8, 9) et relié aux deux chambres d'amortissement (8, 9), à une certaine pression de base (Pr), et deux éléments d'ajustement séparés (17, 17'), comprenant une ou plusieurs soupape(s) à une voie (18, 20) générant une force d'amortissement, chacun avec son propre clapet anti-retour (19, 21), étant agencés dans des tuyaux d'écoulement séparés (27, 27') qui relient entre eux le premier espace (22a) et les chambres d'amortissement (8, 9) respectives, **caractérisé en ce que** pour des différentiels de pression élevés sur le piston principal (7) qui génèrent également une pression augmentée dans le premier espace commun (22a), les caractéristiques d'amortissement sont ajustées par la/les soupape(s) à une voie (18, 20) générant une force d'amortissement dans les éléments d'ajustement (17, 17'), et pour des différentiels de pression faibles sur le piston principal (7), les caractéristiques d'amortissement sont ajustées à la place par un écoulement/une purge à travers le premier tuyau (38b) dans ou sur le piston principal (7) **en ce que** le/les clapet(s) anti-retour (19, 21) dans les éléments d'ajustement (17, 17') empêche(nt) le fluide d'amortissement de s'écouler entre les chambres d'amortissement (8, 9) via les tuyaux d'écoulement séparés (27, 27') qui relient entre eux le premier espace (22a) et les deux chambres d'amortissement (8, 9) respectives.

2. Procédé selon la revendication 1, **caractérisé en ce que** le/les clapet(s) anti-retour (19, 21) dans les éléments d'ajustement (17, 17') sont soumis à, et maintenus dans, une position fermée par une force (Fs) qui est générée par un ressort (37) et qui est égale à la force que les différentiels de pression faibles sur le piston principal (7) génèrent sur le/les clapet(s) anti-retour (19, 21) via le changement de pression dans le premier espace commun (22a).

3. Procédé selon la revendication 1 ou 2, **caractérisé en ce que** les différentiels de pression faibles sur le piston principal (7) sont situés entre 0 et 5 bar.

4. Procédé selon la revendication 2 ou 3, **caractérisé en ce que** l'écoulement de fluide d'amortissement à travers le/les clapet(s) anti-retour (19, 21) est empêché en choisissant la force (Fₛ) agissant sur les clapets anti-retour (19, 21) de telle sorte qu'un certain différentiel de pression sur le piston principal (7) soit requis afin de les ouvrir.

5. Procédé selon la revendication 4, **caractérisé en ce que** le différentiel de pression sur le piston principal (7) qui est requis afin d'ouvrir les clapets anti-retour (19, 21) est déterminé par la pression de base (Pr) qui règne au moins dans le volume commun (22a) et qui est générée par l'élément de pressurisation (23).

6. Procédé selon l'une quelconque des revendications précédentes, **caractérisé en ce que** le ressort (37) est précontraint d'une certaine distance (fs) afin de créer un fonctionnement qui nécessite une force initiale supérieure pour l'ouverture que pour la compression.

7. Procédé selon la revendication 6, **caractérisé en ce que** la précontrainte (fs) du ressort (38) peut être ajustée au moyen d'un élément d'ajustement (32) agencé de manière accessible pour l'ajustement lorsque l'amortisseur (1 ) est monté dans une unité.

8. Procédé selon la revendication 6, **caractérisé en ce qu'**une précontrainte déterminée (fs) du ressort (38) est effectuée lorsque l'on insère pour la première fois l'élément d'ajustement (17, 17') dans l'amortisseur.

9. Procédé selon l'une quelconque des revendications précédentes, **caractérisé en ce que** l'écoulement de fluide d'amortissement à travers le tuyau (38b) est ajustable.

10. Procédé selon la revendication 9, **caractérisé en ce que** l'écoulement de fluide d'amortissement à travers le tuyau (38b) est ajusté par l'action d'une barre d'ajustement (40) qui est agencée dans la tige du piston (8) et qui de part sa forme de conception et une variation de sa position augmente ou réduit l'écoulement de fuite via le piston principal (7).
